# EUROPÄISCHE PATENTANMELDUNG

(11) **EP 2 546 116 A1**
(43) Veröffentlichungstag der Anmeldung: **16.01.2013**
(21) Anmeldenummer: 12170684.0
(22) Anmeldetag: 04.06.2012
(51) Int. Cl.: B60T 7/06, G05G 7/04, G05G 1/46

(54) **Bremssystem für ein Fahrzeug**

(30) Priorität: 11.07.2011 DE 102011078938
(71) Anmelder: ROBERT BOSCH GMBH, 70442 Stuttgart (DE)
(72) Erfinder: Backes, Lothar, 74360 Ilsfeld (DE); Bussmann, Otmar, 74232 Abstatt (DE); Schlichenmaier, Andreas, 74336 Brackenheim-Meimsheim (DE); Masur, Dagobert, 74388 Talheim (DE)

(57) **Zusammenfassung**

Die vorliegende Erfindung betrifft ein Bremssystem für ein Fahrzeug mit einem Hauptbremszylinder (54) mit mindestens einem um einen Hauptbremszylinderkolbenweg zumindest teilweise in eine Innenkammer (56) hinein verstellbaren Kolben (58), und einer Verbindungseinrichtung (60), über welche der Kolben (58) des Hauptbremszylinders (54) mit einem an der Verbindungseinrichtung (60) anordbaren Bremspedal (50) derart verbindbar ist, dass bei einem Verstellen des Bremspedals (50) um einen Bremspedalweg der Kolben (58) zumindest teilweise in die Innenkammer (56) hinein verstellbar ist, wobei die Verbindungseinrichtung (60) zumindest für einen Teilwertebereich des Bremspedalwegs (sp) für eine nichtlineare Pedalübersetzung derart ausgelegt ist, dass mit zunehmendem Bremspedalweg (sp) innerhalb des Teilwertebereichs die Steigung der Zunahme des Hauptbremszylinderkolbenwegs (sk) zunimmt.

## Beschreibung

### Stand der Technik

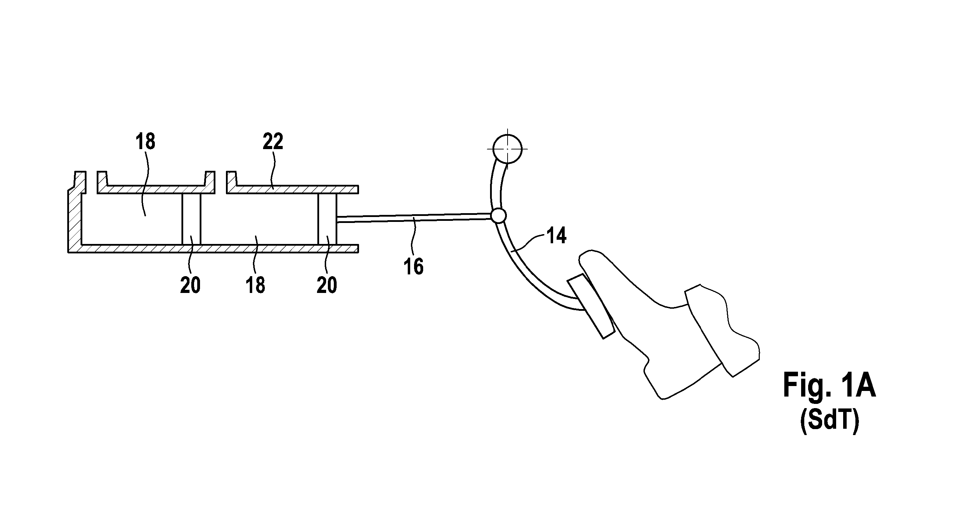

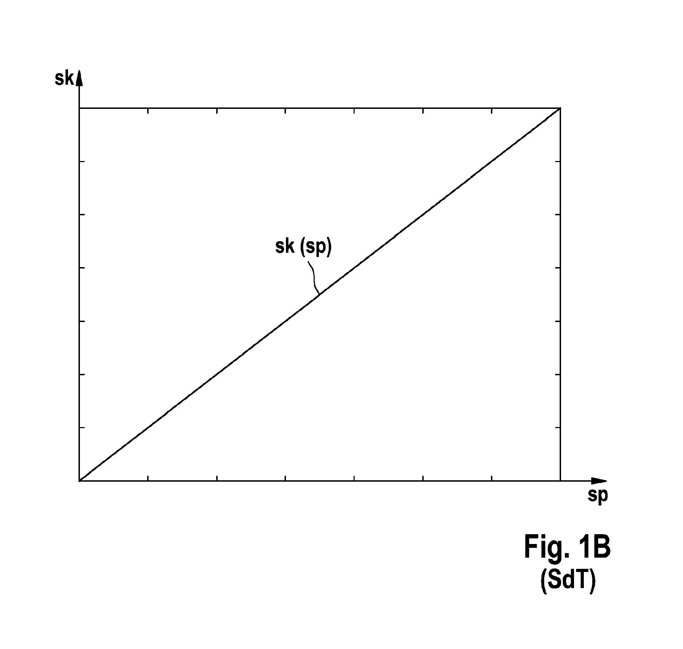

Fig. 1A und 1B zeigen eine schematische Darstellung und eine Kennlinie zum Erläutern eines herkömmlichen Bremssystems. Ein derartiges herkömmliches Bremssystem ist beispielsweise in der DE 10 2008 001 013 A1 beschrieben.

Das in Fig. 1A schematisch dargestellte Bremssystem umfasst ein Bremspedal 14, welches über ein Verbindungselement 16 mit mindestens einem in mindestens eine Innenkammer 18 verstellbaren Kolben 20 eines Hauptbremszylinders 22 verbunden ist. Das Bremssystem weist keinen Bremskraftverstärker auf. Die Pedalübersetzung des Bremssystems ist konstant, wie mit Bezug auf Fig. 1B im Weiteren genauer ausgeführt wird.

Bei der in Fig. 1B dargestellten Kennlinie zeigt die Abszisse einen Bremspedalweg (Pedalweg) sp, um welchen ein Fahrer des mit dem herkömmlichen Bremssystem ausgestatteten Fahrzeugs das Bremspedal 14 (aus seiner Ausgangsstellung/Nichtbetätigungsstellung) verstellt. Die Ordinate gibt einen Hauptbremszylinderkolbenweg sk an, um welchen der mindestens eine verstellbare Kolben 20 in die Innenkammer 18 mitverstellt wird.

Aufgrund der konstanten (linearen) Pedalübersetzung des Bremssystems ist der Hauptbremszylinderkolbenweg sk eine lineare Funktion sk(sp) des Bremspedalwegs. Die Steigung der Funktion sk(sp) ist (nahezu) konstant.

### Offenbarung der Erfindung

Die Erfindung schafft ein Bremssystem für ein Fahrzeug mit den Merkmalen des Anspruchs 1.

### Vorteile der Erfindung

Die Vorteile der Erfindung sind nicht auf die nachfolgend genannten Beispiele beschränkt:

Die vorteilhafte Auslegung der Verbindungseinrichtung für die nicht-lineare (unlineare) Pedalübersetzung ist insbesondere bei Bremssystemen mit Schwarzweißaufteilung und einem vom Bremspedal entkoppelten/entkoppelbaren Bremskreis von besonderem Vorteil. Ein derartiges Bremssystem ist beispielsweise ein rekuperatives Bremssystem, welches eine Fahrzeugachse "by wire" bremst, um somit ein Verblenden von einem generatorisch erzeugten Bremsmoment und einem hydraulisch erzeugten Bremsmoment zu realisieren. Ein solches Bremssystem weist gegenüber einer Bremsanlage ohne einen vom Bremspedal entkoppelbaren Bremskreis ein kleineres durch Pedalbetätigung zu verschiebendes Bremsflüssigkeitsvolumen auf, woraus herkömmlicher Weise ohne Gegenmaßnahmen eine "härtere" Pedalcharakteristik resultiert: ein vorgegebener Bremsdruck wird mit einem geringeren Bremspedalweg aufgebaut. Dies ist jedoch mittels der vorliegenden Erfindung behebbar.

Wahlweise kann ein erfindungsgemäßes Bremssystem auch einen voreingestellten Leerweg des Kolbens aufweisen, bis zu dessen Überbrückung noch kein Bremsdruck im Hauptbremszylinder aufgebaut wird, um auf diese Weise ein generatorisches Bremsen in der Einbremsphase zu ermöglichen. Aufgrund der vorteilhaften Auslegung der Verbindungseinrichtung verlängert sich die Rekuperationsphase durch das anfängliche hohe Pedalübersetzungsverhältnis: die Überwindung des voreingestellten Kolbenleerwegs erfordert einen größeren Bremspedalweg (Pedalweg). Weiterhin erhöht sich durch Verlängerung des Pedalleerwegs und der hiermit verbundenen Verzögerung des hydraulischen Bremsmomentaufbaus im nicht-entkoppelten Bremskreis die Rekuperationseffizienz des Bremssystems.

Zusätzlich ist es aufgrund der vorteilhaften Auslegung der Verbindungseinrichtung nicht notwendig, das Bremssystem mit einem zusätzlichen energieverbrauchenden

Pedalwegsimulator auszustatten. Der herkömmliche steile Anstieg der Pedalkraft nach Überwindung des Kolbenleerwegs wird durch die vorteilhafte Auslegung der Verbindungseinrichtung abgemildert.

Über die vorteilhafte Auslegung der Verbindungseinrichtung sind somit die Kosten, der Energieverbrauch und/oder der Bauraumbedarf des Bremssystems gegenüber einem herkömmlichen Bremssystem mit einem Pedalwegsimulator reduzierbar.

Außerdem empfindet es der Fahrer eines mit dem erfindungsgemäßen Bremssystem ausgestatteten Fahrzeugs nicht als unvorteilhaft, wenn während des Einbremsens in den Hauptbremszylinder über die vorteilhafte Verbindungseinrichtung mit der nicht-linearen Pedalübersetzung ein weiteres (nicht-hydraulisches) Bremsmoment auf mindestens ein Rad des Fahrzeugs ausgeübt wird. Da der Innendruck in der Innenkammer des Hauptbremszylinders bei einem leichten Einbremsen in den Hauptbremszylinder vergleichsweise niedrig bleibt, wird auch der Bremsdruck in mindestens einem Radbremszylinder des Bremssystems in dieser Situation nur geringfügig gesteigert. Somit bewirkt ein leichtes Einbremsen in den Hauptbremszylinder lediglich ein geringes hydraulisches (Gesamt-)Bremsmoment. Die Summe aus dem hydraulischen (Gesamt-)Bremsmoment und dem (nicht-hydraulischen) weiteren Bremsmoment bewirkt somit eine Fahrzeugverzögerung, welche der Fahrer als seiner Betätigung des Bremspedals angepasst empfindet. Der Fahrer hat somit trotz der Steigerung der Verzögerung durch das weitere (nicht-hydraulische) Bremsmoment nicht das Gefühl, dass das Fahrzeug zu stark abgebremst wird. Somit empfindet der Fahrer das ausgeübte weitere (nicht-hydraulische) Bremsmoment auch nicht als störend.

Beispielsweise kann die Verbindungseinrichtung für die nicht-lineare Pedalübersetzung derart ausgelegt sein, dass der Hauptbremszylinderkolbenweg zumindest für den Teilwertebereich des Bremspedalwegs eine linksgekrümmte Funktion des Bremspedalwegs ist. Dies ist auch so umschreibbar, dass der Hauptbremszylinderkolbenweg für den Teilwertebereich des Bremspedalwegs eine Funktion des Bremspedalwegs mit einer positiven ersten Ableitung und einer positiven zweiten Ableitung ist.

Vorzugsweise umfasst das Bremssystem einen Generator. Bevorzugter Weise wirkt der Generator auf eine der Fahrzeugachsen. Da aufgrund der vorteilhaften Auslegung der Verbindungseinrichtung mit einem anfänglich großen Bremspedalweg bei gleichzeitig geringem Betätigungsweg des Hauptbremszylinderkolbens eine leichte Betätigung des Bremspedals innerhalb des Teilwertebereichs nur einen vergleichsweise geringen Innendruck in der Innenkammer bewirkt, kann der Generator zur Rekuperation eingesetzt werden, ohne dass dies zu einem Überbremsen führt. Trotz des Einsetzens des Generators hat der Fahrer somit nicht das Gefühl, dass das Fahrzeug zu stark abgebremst wird.

Als Alternative oder als Ergänzung dazu kann das Bremsmoment zumindest einen ersten Bremskreis mit mindestens einem ersten Radbremszylinder umfassen, welcher über ein Trennventil derart mit dem Hauptbremszylinder hydraulisch verbunden ist, dass bei einem Vorliegen des Trennventils in einen zumindest teilgeöffneten Zustand ein Bremsdruck in dem mindestens einen ersten Radbremszylinder mittels einer Steigerung des Innendrucks steigerbar ist, und wobei bei einem Vorliegen des Trennventils in einem geschlossenen Zustand eine Steigerung des Bremsdrucks in dem mindestens einen ersten Radbremszylinder trotz der Steigerung des Innendrucks unterbunden ist. Zusätzlich kann das Bremssystem noch einen zweiten Bremskreis mit mindestens einem zweiten Radbremszylinder aufweisen, in welchen der Fahrer auch nach einem Schließen des Trennventils über die Steigerung des Innendrucks in den Hauptbremszylinder direkt einbremsen kann. Aufgrund der vorteilhaften Auslegung der Verbindungskomponente für die nicht-lineare Pedalübersetzung kann der Fahrer auch nach dem Schließen des Trennventils mit einem weichen Bremsbetätigungsgefühl in den zweiten Bremskreis hineinbremsen. Der Fahrer empfindet deshalb auch nach dem Schließen des Trennventils das direkte Einbremsen in den zweiten Bremskreis über den Hauptbremszylinder als angenehm.

In einer vorteilhaften Ausführungsform kann die Verbindungseinrichtung mit dem Bremspedal als Viergelenk ausgebildet sein. Beispielsweise kann die als Viergelenk ausgebildete Verbindungseinrichtung einen Zwischenhebel, welcher um ein Befestigungsende des Zwischenhebels drehbar angeordnet ist, ein Pedalverbindungselement, welches über ein erstes Gelenk mit dem Bremspedal und über ein zweites Gelenk mit dem Zwischenhebel verbunden ist und ein mit dem Kolben verbundenes Kolben-Verbindungselement, welches über ein drittes Gelenk mit dem Zwischenhebel verbunden ist, umfassen. Die vorteilhafte Verbindungseinrichtung ist somit kostengünstig ausführbar.

In einer weiteren kostengünstig ausführbaren Realisierungsmöglichkeit umfasst die Verbindungseinrichtung eine mit dem Bremspedal verbundene Kurvenscheibe, deren Wölbungsfläche eine Rolle der Verbindungseinrichtung kontaktiert. Beispielsweise kann die Rolle an einem Kontakthebel der Verbindungseinrichtung angeordnet sein, welcher um ein Befestigungsende des Kontakthebels drehbar angeordnet ist, wobei ein mit dem Kolben verbundenes Kolben-Verbindungselement der Verbindungseinrichtung über ein Gelenk mit dem Kontakthebel verbunden ist.

Ebenso kann die Rolle an einem axial geführten Stößel der Verbindungseinrichtung angeordnet sein. Auch dies gewährleistet eine Realisierungsmöglichkeit für die Verbindungseinrichtung der vorteilhaften nicht-linearen Pedalübersetzung.

Des Weiteren kann die Kurvenscheibe über eine Zahnradstufe mit dem Bremspedal verbunden sein. Auch dies bewirkt die oben schon genannten Vorteile.

### Kurze Beschreibung der Zeichnungen

Weitere Merkmale und Vorteile der vorliegenden Erfindung werden nachfolgend anhand der Figuren erläutert. Es zeigen:
- Fig. 1A und 1 B: eine schematische Darstellung und eine Kennlinie zum Erläutern eines herkömmlichen Bremssystems;
- Fig. 2A bis 2E: eine schematische Darstellung, ein Kinematikbild und drei Kennlinien zum Darstellen einer ersten Ausführungsform des Bremssystems;
- Fig. 3: eine schematische Darstellung einer zweiten Ausführungsform des Bremssystems;
- Fig. 4: eine schematische Darstellung einer dritten Ausführungsform des Bremssystems;
- Fig. 5: eine schematische Darstellung einer vierten Ausführungsform des Bremssystems; und
- Fig. 6: eine schematische Darstellung einer fünften Ausführungsform des Bremssystems.

### Ausführungsformen der Erfindung

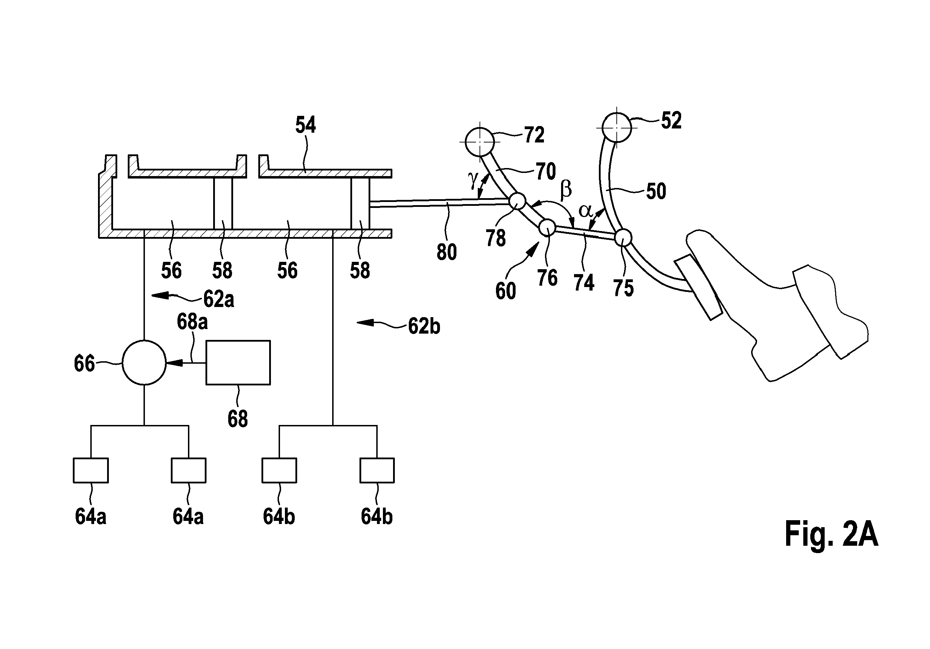

Fig. 2A bis 2E zeigen eine schematische Darstellung, ein Kinematikbild und drei Kennlinien zum Darstellen einer ersten Ausführungsform des Bremssystems.

Das in Fig. 2A schematisch wiedergegebene Bremssystem wirkt mit einem Bremspedal 50 zusammen. Das Bremspedal 50 kann beispielsweise eine Untereinheit des Bremssystems sein. Ebenso kann das Bremspedal 50 als zusätzliche Komponente an dem Bremssystem angeordnet sein. Das Bremspedal 50 ist beispielhaft an einem Befestigungsende 52 drehbar an einem (nicht skizzierten) Chassis eines mit dem Bremssystem ausgestatteten Fahrzeugs angeordnet/gelagert. Eine Betätigung des Bremspedals 50 bewirkt damit eine Drehbewegung des Bremspedals 50 um das Befestigungsende 52.

Das Bremssystem hat einen Hauptbremszylinder 54, welcher bei der dargestellten Ausführungsform als Tandemhauptbremszylinder ausgebildet ist. Der Hauptbremszylinder 54 weist bei einer derartigen Ausbildung zwei zumindest teilweise in jeweils eine Innenkammer 56 hineinverstellbare Kolben 58 auf. Die beiden Kolben 58 können beispielsweise ein Stangenkolben und ein Schwimmkolben sein. Vorzugsweise sind die beiden Kolben 58 mittels einer Betätigung des Bremspedals 50 ab einer bestimmten Mindestbetätigung (gemeinsam) verstellbar. Es wird darauf hingewiesen, dass das Bremssystem jedoch nicht auf eine Ausstattung mit einem als Tandemhauptbremszylinder ausgebildeten Hauptbremszylinder 54 limitiert ist. Anstelle eines Tandemhauptbremszylinders kann das Bremssystem auch einen anderen Hauptbremszylindertyp mit mindestens einem um einen Hauptbremszylinderkolbenweg zumindest teilweise in eine Innenkammer 56 hinein verstellbaren Kolben 58 aufweisen.

Das Bremssystem umfasst auch eine Verbindungseinrichtung 60, über welche der mindestens eine Kolben 58 des Hauptbremszylinders 54 mit dem an der Verbindungseinrichtung 60 anordbaren/angeordneten Bremspedal 50 derart verbindbar/verbunden ist, dass bei einem Verstellen des Bremspedals 50 (aus seiner Ausgangsstellung/Nichtbetätigungsstellung) um einen Bremspedalweg der mindestens eine Kolben 58 zumindest teilweise in die ihm zugeordnete Innenkammer 56 hinein verstellbar ist. Auf diese Weise kann ein Innendruck in der Innenkammer 56 gesteigert werden. Wie unten genauer ausgeführt wird, ist die Verbindungseinrichtung 60 zumindest für einen Teilwertebereich der Fahrerbremskraft für eine nichtlineare Pedalübersetzung ausgelegt. Darunter ist zu verstehen, dass mit zunehmendem Bremspedalweg innerhalb des Teilwertebereichs die Steigung der Zunahme des Hauptbremszylinderkolbenwegs zunimmt. Die vorteilhafte Verbindungseinrichtung 60 und die sich aus der nichtlinearen Pedalübersetzung ergebenden Vorteile werden unten ausführlicher beschrieben.

Das Bremssystem kann auch mindestens einen (hier nur schematisch dargestellten) Bremskreis 62a und 62b mit mindestens einem Radbremszylinder 64a und 64b aufweisen. Der mindestens eine Radbremszylinder 64a und 64b ist in diesem Fall derart mit dem Hauptbremszylinder 54 hydraulisch verbunden/in eine hydraulische Verbindung schaltbar, dass ein Bremsdruck in dem mindestens einen Radbremszylinder 64a und 64b bei einer Steigerung des Innendrucks in dem Hauptbremszylinder 54 steigerbar ist.

Bei der dargestellten Ausführungsform ist der erste Bremskreis 62a mit dem mindestens einen ersten Radbremszylinder 64a über ein Trennventil 66 derart mit dem Hauptbremszylinder 54 hydraulisch verbunden, dass bei einem Vorliegen des Trennventils 66 in einen zumindest teilgeöffneten Zustand der Bremsdruck in den mindestens einen ersten Radbremszylinder 64a mittels der Steigerung des Innendrucks steigerbar ist. Demgegenüber ist bei einem Vorliegen des Trennventils 66 in einem geschlossenen Zustand eine Steigerung des Bremsdrucks in den mindestens einen ersten Radbremszylinder 64a trotz der Steigerung des Innendrucks unterbunden.

Der erste Bremskreis 62a ist somit als von dem Hauptbremszylinders 54 entkoppelbarer/abtrennbarer/entbindbarer zweiter Bremskreis 62b bezeichenbar. Demgegenüber ist der zweite Bremskreis 62b derart mit dem Hauptbremszylinder 54 verbunden, dass der Fahrer auch nach einem Schließen des Trennventils 66 direkt in den mindestens einen Radbremszylinder 64b des zweiten Bremskreises 62b einbremsen kann. Man kann dies auch so umschreiben, dass der zweite Bremskreis 62b als nichtentkoppelbarer/nicht-abtrennbarer/nicht-entbindbarer Bremskreis 62b ausgebildet ist. Es wird darauf hingewiesen, dass die Ausbildbarkeit des hier beschriebenen Bremssystems nicht auf die Ausstattung mit dem entkoppelbaren ersten Bremskreis 62a und dem nicht-entkoppelbaren zweiten Bremskreis 62b beschränkt ist. Beispielsweise kann das Bremssystem auch mehrere abtrennbare oder mehrere nicht-abtrennbare Bremskreise aufweisen.

Optionalerweise kann das Bremssystem auch einen Generator 68 umfassen. Der Generator 68 kann zum Aufladen einer (nicht skizzierten) Batterie bei einem Abbremsen des Fahrzeugs unter gleichzeitiger Aufbringung eines Generator-Bremsmoments auf mindestens eines der Räder des Fahrzeugs genutzt werden. Mittels des Generators 68, eines (nicht dargestellten) Sensors und/oder einer dazwischen angeordneten (nicht dargestellten) Steuervorrichtung kann ein Trennventil-Steuersignal 68a an das Trennventil 66 ausgegeben werden. Insbesondere kann, sofern das von dem Generator 68 ausgeübte Generator-Bremsmoment ungleich Null ist, ein Schließsignal als das Trennventil-Steuersignal 68a ausgegeben werden. Andernfalls kann ein Öffnungssignal als das Trennventil-Steuersignal 68a an das Trennventil 66 ausgegeben werden.

Das hier beschriebene Bremssystem ist aufgrund der Auslegung der Verbindungseinrichtung 60 für die nicht-lineare Pedalübersetzung des Bremspedalwegs zumindest innerhalb des Teilwertebereichs besonders vorteilhaft dazu geeignet, mit einem entkoppelbaren Bremskreis 62a und/oder einem Generator 68 zusammenzuwirken. Dazu ist die Verbindungseinrichtung 60 so ausgelegt, dass mit zunehmendem Bremspedalweg innerhalb des Teilwertebereichs die Steigung der Zunahme des Hauptbremszylinderkolbenwegs zunimmt. Insbesondere kann die Verbindungseinrichtung 60 für die nicht-lineare Pedalübersetzung derart ausgelegt sein, dass der Hauptbremszylinderkolbenweg zumindest für den Teilwertebereich des Bremspedalwegs eine linksgekrümmte Funktion des Bremspedalwegs ist. Man kann dies auch so umschreiben, dass aufgrund der vorteilhaften Auslegung der Verbindungseinrichtung 60 für die nicht-lineare Pedalübersetzung der Hauptbremszylinderkolbenweg zumindest für den Teilwertebereich des Bremspedalwegs eine Funktion des Bremspedalwegs mit einer positiven ersten Ableitung und einer positiven zweiten Ableitung ist.

Bei der in Fig. 2A schematisch dargestellten Ausführungsform ist die Verbindungseinrichtung 60 als ein Viergelenk ausgebildet. Es wird jedoch darauf hingewiesen, dass die Ausbildbarkeit der Verbindungseinrichtung 60 für die vorteilhafte nicht-lineare Pedalübersetzung nicht auf das dargestellte Ausführungsbeispiel beschränkt ist:

Die als Viergelenk ausgebildete Verbindungseinrichtung 60 ist für eine nichtlineare Pedalübersetzung ausgelegt. Dazu weist die Verbindungseinrichtung 60 einen Zwischenhebel 70 auf, welcher an einem Befestigungsende 72 am Chassis derart gelagert ist, dass der Zwischenhebel 70 um das Befestigungsende 72 drehbar ist. Ein Pedal-Verbindungselement 74 verbindet einen Verbindungselement-Kontaktpunkt 75 an dem Bremspedal 50 mit einem Pedal-Kontaktpunkt 76 des Zwischenhebels 70.

Die Verbindung des Pedal-Verbindungselements 74 mit dem Bremspedal 50 (am Verbindungselement-Kontaktpunkt 75) ist als ein erstes Gelenk ausgebildet. Die Anordnung des Pedal-Verbindungselements 74 zwischen dem Bremspedal 50 und dem Zwischenhebel 70 ist somit so ausgebildet, dass die Ausrichtung des Pedal-Verbindungselements 74 zu dem Bremspedal 50 (und dem Zwischenhebel 70) veränderbar ist. Man kann dies auch so umschreiben, dass ein Winkel α zwischen dem Pedal-Verbindungselement 74 und einer Tangente/Längsrichtung des Bremspedals 50 am Verbindungselement-Kontaktpunkt 75 veränderbar ist. Auch die Verbindung des Pedal-Verbindungselements 74 mit dem Zwischenhebel 70 (am Pedal-Kontaktpunkt 76) ist als ein zweites Gelenk ausgebildet, so dass ein Winkel β zwischen dem Pedal-Verbindungselement 74 und einer Tangente/Längsrichtung des Zwischenhebels 70 an dem Kontaktpunkt 76 veränderbar ist.

Zwischen dem Kontaktpunkt 76 und dem Befestigungsende 72 liegt ein Kolben-Kontaktpunkt 78, an welchem ein den Zwischenhebel 70 mit dem (mindestens einen benachbarten) Kolben 58 verbindendes Kolben-Verbindungselement 80 angeordnet ist. Die Verbindung des Kolben-Verbindungselements 80 mit dem Zwischenhebel 70 (am Kolben-Kontaktpunkt 78) ist als ein Gelenk ausgebildet. Auch die Stellung des Kolben-Verbindungselements 80 zu dem Zwischenhebel 70 ist somit veränderbar. Ebenso ist ein Winkel γ zwischen dem Kolben-Verbindungselement 80 und einer Tangente/Längsrichtung am Kolben-Kontaktpunkt 78 des Zwischenhebels 70 veränderbar. (Die vier Gelenke des eigentlichen Viergelenks sind an den Positionen 52, 72, 75 und 76 ausgebildet.)

Es wird darauf hingewiesen, dass Fig. 2A lediglich als schematische Darstellung der als Viergelenk ausgebildeten Verbindungseinrichtung 60 zu interpretieren ist. Da sich das Übersetzungsverhältnis des Bremspedalwegs in den Hauptbremszylinderkolbenweg über die Längenverhältnisse und die Winkelverhältnisse ergibt, ist die vorteilhafte Verbindungseinrichtung 60 nicht auf die in Fig. 2A wiedergegebenen Längen- und Winkelverhältnisse beschränkt. Stattdessen sind die Längenverhältnisse und Winkelverhältnisse unabhängig von den in Fig. 2A wiedergegebenen Größen frei einstellbar.

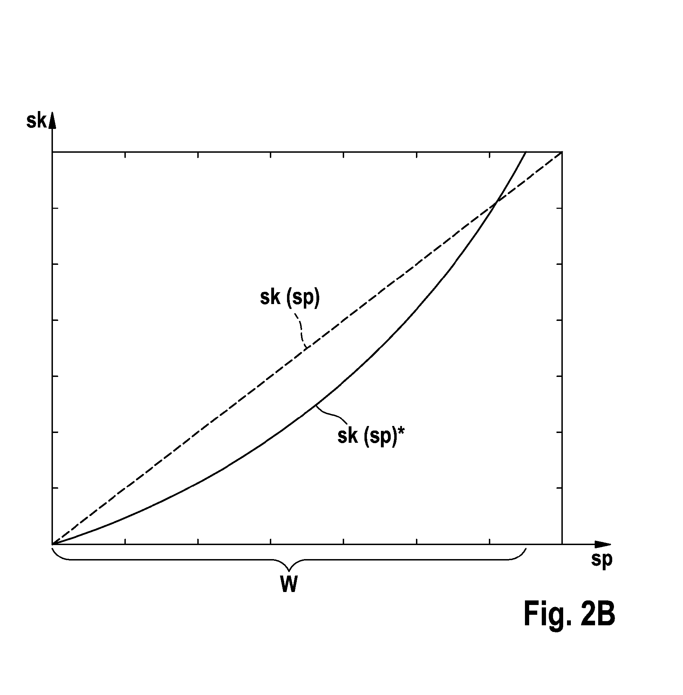

Fig. 2B zeigt eine Kennlinie zum Erläutern der nicht-linearen Pedalübersetzung. Die Abszisse der Fig. 2B entspricht einem Bremspedalweg (Pedalweg) sp, um welchen das Bremspedal (aus seiner Ausgangsstellung/Nichtbetätigungsstellung) verstellt wird. (Das Bremspedal liegt insbesondere bei einer Nichtbetätigung, bzw. ohne auf eine darauf ausgeübte Kraft, in seiner Ausgangsstellung/Nichtbetätigungsstellung vor.) Die Ordinate der Fig. 2B gibt einen Hauptbremszylinderkolbenweg sk an, um welchen der mindestens eine verstellbare Kolben (Hauptbremszylinderkolben) in die Innenkammer mitverstellt wird.

Der Graph sk(sp)* gibt die vorteilhafte nicht-lineare Pedalübersetzung wieder. Anhand des Graphen sk(sp)* ist erkennbar, dass bei der vorteilhaften nicht-linearen Pedalübersetzung zumindest (für einen Teilwertebereich W des Bremspedalwegs sp) mit zunehmendem Bremspedalweg sp innerhalb des Teilwertebereichs W die Steigung der Zunahme des Hauptbremszylinderkolbenwegs sk zunimmt. (Der Stand der Technik der Fig. 1B ist als (gestrichelte) Linie sk(sp) zum Vergleich ebenfalls dargestellt.)

Der Teilwertebereich W ist zumindest ein Teilbereich des Bremspedalwegs sp, um welchen das Bremspedal aus seiner Ausgangstellung/Nichtbetätigungsstellung verstellbar ist. Bevorzugter Weise ist der Teilwertebereich W an einen Bremspedalweg sp gleich Null, bei welchem das Bremspedal in seiner Ausgangstellung/Nichtbetätigungsstellung vorliegt, angrenzend. Der Bremspedalweg gleich Null kann insbesondere eine untere Grenze des Teilwertebereichs W definieren.

Die nicht-lineare Pedalübersetzung bewirkt somit bei einem anfänglichen Verstellen des Bremspedals aus seiner Ausgangsstellung/Nichtbetätigungsstellung, bzw. bei einem kleinen Bremspedalweg sp, gegenüber dem Stand der Technik einen reduzierten Hauptbremszylinderkolbenweg sk, und somit einem niedrigeren Druck in der Innenkammer. Allerdings nähert sich der Graph sk(sp)* der Linie sk(sp) mit zunehmendem Bremspedalweg sp wieder an und kann die Linie sk(sp) sogar übersteigen. Der Fahrer kann somit trotz der nicht-linearen Pedalübersetzung ab einem bestimmten Bremspedalweg sp wieder zumindest den mittels des Stands der Technik mit dem gleichen Bremspedalweg sp erzielbaren Druck in dem Hauptbremszylinder aufbauen.

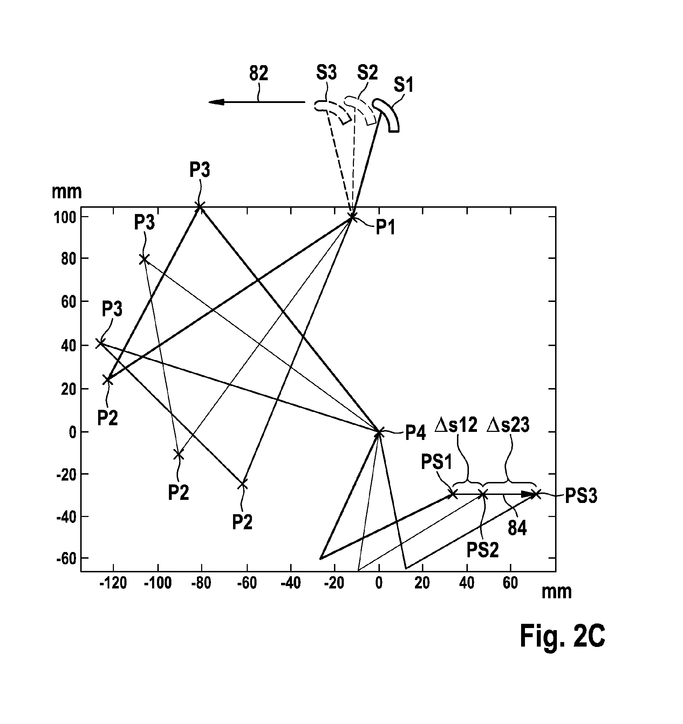

Fig. 2C zeigt ein Kinematikbild zum Erläutern einer möglichen Funktionsweise der als Viergelenk ausgebildeten vorteilhaften Verbindungseinrichtung 60 für die nicht-lineare Pedalübersetzung. Die Koordinaten des Kinematikbilds geben die Positionen der Punkte P1 bis P4 (in Millimeter) wieder.

Anhand der Fig. 2C ist eine Realisierungsmöglichkeit zur Viergelenk-Kinematik erkennbar. Die Punkte P1 bis P4 können beispielsweise den zuvor genannten Punkten 52, 72, 75 und 76 entsprechen. Der Pfeil 82 zeigt eine erste Verstellrichtung des in verschiedene Stellungen S1 bis S3 verstellbaren Bremspedals an. Der Pfeil 84 gibt eine mit der Verstellbewegung des Bremspedals korrespondierende zweite Verstellrichtung mindestens eines in den Hauptbremszylinder zumindest teilweise hineinverstellbaren Kolbens, wie beispielsweise eines Stangenkolbens und/oder eines Schwimmkolbens, wieder.

Sofern der Fahrer das Bremspedal nicht betätigt, liegt das Bremspedal in seiner Ausgangsstellung S1 vor. Bei einem Vorliegen des Bremspedals in der Ausgangsstellung S1 befindet sich das in das Innenvolumen hineinragende Ende des schematisch wiedergegebenen Kolbens in einer ersten Position PS1. Das zugeordnete Innenvolumen hat seine maximale Größe.

Mittels der auf das Bremspedal aufgebrachten Fahrerbremskraft ist das Bremspedal aus der Stellung S1 in eine mittlere Stellung S2 verstellbar, in welcher das in das Innenvolumen hineinragende Ende des schematisch wiedergegebenen Kolbens in einer zweiten Position PS2 vorliegt. Zwischen den Positionen PS1 und PS2 liegt eine erste Wegdifferenz Δs12. Durch zunehmende Betätigung des Bremspedals kann das Bremspedal auch aus der mittleren Stellung S2 in eine maximal ausgelenkte Stellung S3 verstellt werden, wodurch das in das Innenvolumen hineinragende Ende des schematisch wiedergegebenen Kolbens um eine zweite Wegdifferenz Δs23 entlang des Pfeils 84 in eine dritte Position PS3 verstellt. Das zugeordnete Innenvolumen ist in diesem Fall minimal.

Die Abstände zwischen den Stellungen S1 und S2 und den Stellungen S2 und S3 sind gleich. Wie anhand der Fig. 2C jedoch zu erkennen ist, ist die zweite Wegdifferenz Δs23 deutlich größer als die erste Wegdifferenz Δs12 ist. Somit ist mittels der Verbindungseinrichtung ein gleichmäßiges Verstellen des Bremspedals in das vorteilhafte Verstellen des mindestens einen Kolbens entlang des Pfeils 84 mit steigender Zunahme des Verstellwegs des mindestens einen Kolbens übersetzbar. Man kann dies auch so umschreiben, dass ein leichtes Verstellen des Bremspedals aus der Ausgangsstellung S1 nur zu einem Verstellen des mindestens einen Kolbens des Hauptbremszylinders um eine vergleichsweise geringe Wegdifferenz führt, während ein weiteres Verstellen des Bremspedals ab der mittleren Stellung S2 zu einem Verstellen des mindestens einen Kolbens des Hauptbremszylinders um eine deutlich größere Wegdifferenz führt. Das leichte Verstellen des Bremspedals aus der Ausgangsstellung S1 bewirkt somit nur eine relativ geringe Zunahme des Innendrucks in dem mindestens einen Innenvolumen des Hauptbremszylinders, während das weitere Verstellen des Bremspedals ab der mittleren Stellung S2 den Innendruck in dem mindestens einen Innenvolumen signifikant steigert. Auf die sich aus dieser Übersetzung ergebenden Vorteile wird anhand der folgenden Figuren genauer eingegangen.

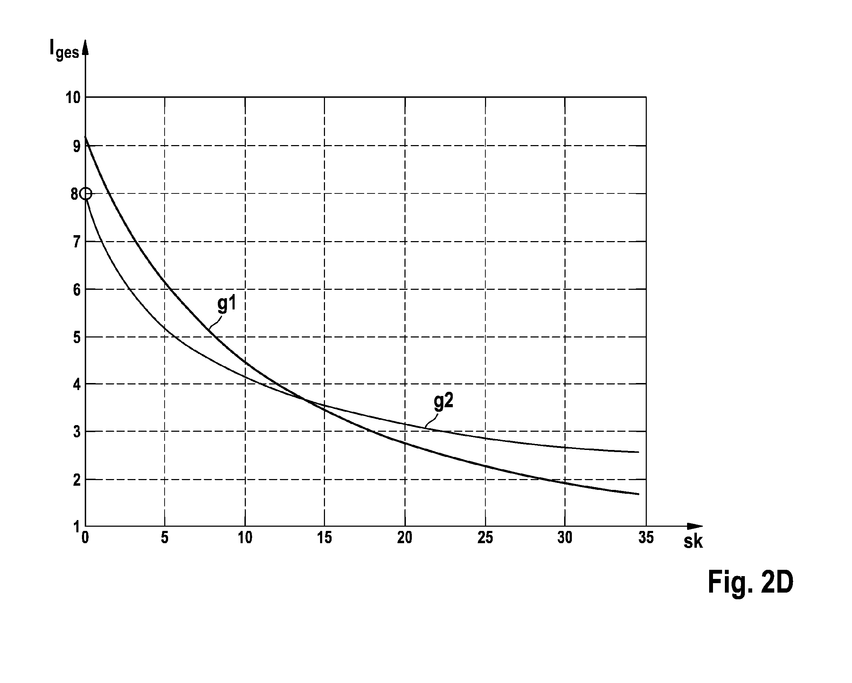

Fig. 2D zeigt eine Kennlinie zum Erläutern der vorteilhaften Übersetzung der Verbindungseinrichtung. Die Abszisse der Fig. 2D gibt den Hauptbremszylinderkolbenweg sk mindestens eines in dem Hauptbremszylinder verstellbar angeordneten Kolbens, beispielsweise eines Stangenkolbens und/oder eines Schwimmkolbens, wieder. Die Ordinate der Fig. 2D entspricht einem dem Hauptbremszylinderkolbenweg sk zugeordneten Gesamtübersetzungsverhältnis Iges der Verbindungseinrichtung. Das Gesamtübersetzungsverhältnis Iges beschreibt den Quotienten von Bremspedalweg und Hauptbremszylinderkolbenweg sk.

Die Graphen g1 und g2 geben zwei mittels der nicht-linearen Übersetzung der Verbindungseinrichtung bewirkbare Relationen zwischen dem Hauptbremszylinderkolbenweg sk und dem Gesamtübersetzungsverhältnis Iges der Verbindungseinrichtung wieder. Für beide Graphen g1 und g2 weist das Gesamtübersetzungsverhältnis Iges bei einem Hauptbremszylinderkolbenweg sk gegen Null sein Maximum auf. Bei einem zunehmenden Hauptbremszylinderkolbenweg sk nimmt des Gesamtübersetzungsverhältnis Iges für beide Graphen g1 und g2 stetig ab. Vorzugsweise ist das Gesamtübersetzungsverhältnis Iges eine linksgekrümmte Kurve über dem Hauptbremszylinderkolbenweg sk. Beide Graphen g1 und g2 haben ihr Minimum bei dem maximal ausführbaren Hauptbremszylinderkolbenweg sk.

Man kann die Graphen g1 und g2 auch so umschreiben, dass bei einem Vorliegen des mindestens einen verstellbaren Kolbens des Hauptbremszylinders in seiner am weitesten aus dem zugeordneten Innenvolumen herausragenden Stellung ein Hineinverstellen zum Verkleinern des Innenvolumens eine vergleichsweise große Pedalwegdifferenz erfordert. Für ein weiteres Verstellen des mindestens einen Kolbens des Hauptbremszylinders muss jedoch nur eine deutlich geringere Pedalwegdifferenz ausgeführt werden. Die auszuführende Pedalwegdifferenz wird minimal, wenn das Volumen des von dem mindestens einen Kolben des Hauptbremszylinders begrenzten Innenvolumens minimal wird.

Die in Fig. 2D wiedergegebenen Graphen g1 und g2 stellen lediglich mögliche Übersetzungsverhältnisse dar. Es wird darauf hingewiesen, dass die Ausbildbarkeit der Verbindungseinrichtung nicht auf ein Übersetzungsverhältnis gemäß einem der Graphen g1 und g2 limitiert ist.

Die Graphen g1 und g2 unterscheiden sich deutlich von einer üblichen Relationen zwischen dem Hauptbremszylinderkolbenweg sk und der Pedalwegdifferenz eines herkömmlichen Bremssystems mit einer konstanten Pedalübersetzung: Bei einem herkömmlichen Bremssystem mit einer konstanten Pedalübersetzung ist das Gesamtübersetzungsverhältnis Iges lediglich eine (nahezu) konstante Funktion des Hauptbremszylinderkolbenwegs sk (beispielsweise zwischen den Werten 3 und 4). Somit führt bei einem herkömmlichen Bremssystem mit einer konstanten Pedalübersetzung bereits ein leichtes Betätigen des Bremspedals mit einer Mindestbetätigungsstärke zu einer relativ großen Verstellbewegung des mindestens einen Kolbens des Hauptbremszylinders, und damit zu einem signifikanten Einbremsen in den Hauptbremszylinder. Demgegenüber weist das hier beschriebene Bremssystem den Vorteil auf, dass gerade für ein Verstellen des am weitesten hinausragenden mindestens einen verstellbaren Kolbens des Hauptbremszylinders das Bremspedal um eine vergleichsweise große Pedalwegdifferenz zu verstellen ist.

Man kann dies auch so umschreiben, dass das Bremssystem auch ohne einen ausgebildeten Leerweg aufgrund der nicht-linearen Übersetzung mittels der Verbindungseinrichtung den Vorteil gewährt, dass bei einer leichten Betätigung des Bremspedals nur ein vergleichsweise geringer Innendruck in der mindestens einen Innenkammer des Hauptbremszylinders aufgebaut wird. Somit besteht die Möglichkeit, auch bei einer leichten Betätigung des Bremspedals durch den Fahrer einen Generator zum Aufladen einer Batterie einzusetzen, ohne dass der Fahrer dies als ein zu starkes Abbremsen des Fahrzeugs empfindet. Ebenso besteht die Möglichkeit, auch bei einer leichten Betätigung des Bremspedals mindestens einen entkoppelbaren Bremskreis durch das Schließen eines Trennventils von dem Hauptbremszylinder abzukoppeln, ohne dass der Fahrer dies ais "Hartwerden" des Bremspedals wahrnimmt.

Durch die stetige Abnahme des Gesamtübersetzungsverhältnisses Iges auch bei einem hohen Hauptbremszylinderkolbenweg sk ist gewährleistet, dass die bei einem leichten Betätigen des Bremspedals "verzögerte" Zunahme des Innendrucks schnell kompensierbar ist, sobald das Bremspedal stärker betätigt wird. Es ist deshalb aufgrund der vorteilhaften nicht-linearen Pedalübersetzung gewährleistet, dass der Fahrer mittels einer leicht ausführbaren Betätigung des Bremsbetätigungselements den mindestens einen verstellbaren Kolben des Hauptbremszylinders um einen großen Hauptbremszylinderkolbenweg sk verstellen kann und somit durch eine Betätigung des Bremspedals direkt eine signifikante Zunahme des Innendrucks in der mindestens einen Innenkammer des Hauptbremszylinders bewirken kann. Bei dem hier beschriebenen Bremssystem ist gewährleistet, dass zwar eine leichte Betätigung des Bremspedals nicht zu einem wesentlichen Innendruck in der mindestens einen Innenkammer führt, jedoch bei einer starken Betätigung des Bremspedals schnell ein signifikanter Druck in der mindestens einen Innenkammer aufbaubar ist.

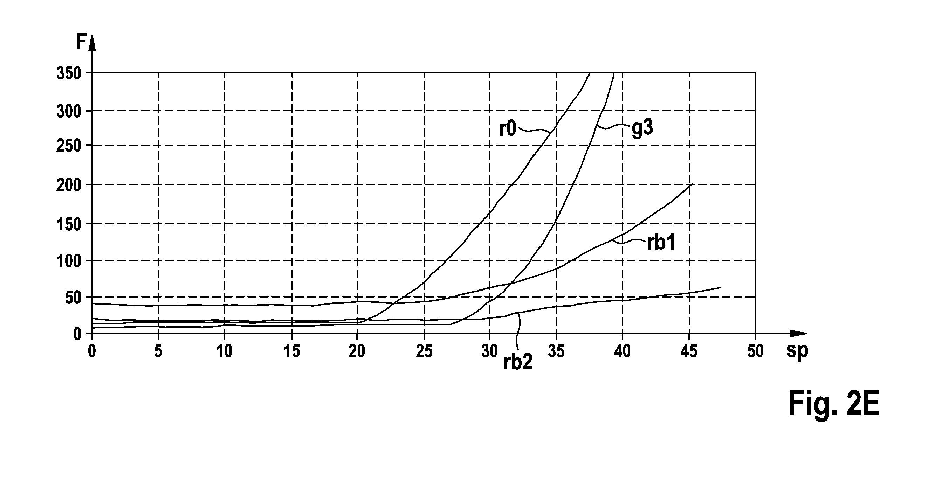

Fig. 2E zeigt eine realisierbare vorteilhafte Relation zwischen einem Bremspedalweg sp und der dazu auf das Bremspedal aufzubringenden Fahrerbremskraft F. Die Abszisse der Kennlinie der Fig. 2E gibt den Bremspedalweg sp (in mm) wieder. Die Ordinate der Fig. 2E entspricht der dazu auf das Bremspedal auszuübenden Fahrerbremskraft F (in Newton).

Der Graph g3 gibt die mittels der Verbindungseinrichtung für die nicht-lineare Pedalübersetzung realisierbare Relation zwischen dem Bremspedalweg sp und der Fahrerbremskraft F an. Zum Vergleich sind auch standardgemäße Relationen r0, rb1, und rb2 in die Fig. 2E eingezeichnet. Die standardgemäße Relation r0 entspricht der eines herkömmlichen Bremssystems mit einem entkoppelten Bremskreis und einer konstanten Pedalübersetzung ohne einen Bremskraftverstärker. Die Relationen rb1 und rb2 geben die Charakteristiken von standardgemäßen Bremssystemen mit einer konstanten Pedalübersetzung an, wobei die Bremssysteme der Relationen rb1 und rb2 jeweils mit einem Bremskraftverstärker ausgestattet sind.

Wie anhand der Fig. 2E zu erkennen ist, bietet die Ausstattung des erfindungsgemäßen Bremssystems mit dem vorteilhaften Viergelenk gegenüber einer konstanten Pedalübersetzung eines herkömmlichen Bremssystems den Vorteil, dass auch ohne einen Bremskraftverstärker eine, insbesondere für ein rekuperatives Bremssystem, besser geeignete Pedalcharakteristik erzielbar ist. Dabei kann das Viergelenk so ausgelegt werden, dass sich auch ohne einen Bremskraftverstärker eine Anpassung des Bremspedalkraftverlaufs an einen bevorzugten Bremspedalkraftverlauf eines Bremssystems mit einem Bremskraftverstärker ergibt.

Somit bietet die vorteilhafte Technologie den positiven Effekt, dass mittels des verwendeten Viergelenks für die nicht-lineare Pedalübersetzung trotz eines Verzichts auf einen Bremskraftverstärker eine vorteilhafte Pedalcharakteristik, insbesondere für ein rekuperatives Bremssystem, vor Allem mit einem entkoppelten/entkoppelbaren By-Wire-Bremskreis, bewirkbar ist:

Für einen kleinen Bremspedalweg sp bleibt die Bremskraft F vergleichsweise klein. Beispielsweise liegen bis zu einem Bremspedalweg sp von 26 mm die Werte der Relation r0 über den Werten des Graphen g3. Entsprechend bleibt auch der Innendruck in dem Hauptbremszylinder bei dem mit dem Graphen g3 wiedergegebenen Bremssystem kleiner als der Innendruck entsprechend der Relation r0. Somit ist bei dem mit dem Graphen g3 wiedergegebenen Bremssystem der Generator auch bei einer leichten Betätigung des Bremspedals einsetzbar, ohne dass das Fahrzeug zu stark abgebremst wird. Somit bietet sich bereits bei dem mit dem Graphen g3 wiedergegebenen Bremssystem öfter die Möglichkeit, mittels des Einsetzens des Generators eine Batterie aufzuladen und auf diese Weise den Kraftstoffverbrauch des Fahrzeugs zu reduzieren. Die vorteilhafte Verbindungseinrichtung mit der nicht-linearen Pedalübersetzung bewirkt somit aufgrund des flachen Anstiegs der Bremspedalweg-Bremscharakteristik bei einem kleinen Bremspedalweg sp eine Verlängerung der Rekuperationsphase, welche eine Erhöhung der Rekuperationseffizienz bewirkt.

Außerdem bewirkt der vergleichsweise geringe Innendruck in dem Hauptbremszylinder des mit dem Graphen g3 wiedergegebenen Bremssystems auch nach einem Abkoppeln mindestens eines Bremskreises von dem Hauptbremszylinder (durch Schließen eines Trennventils) einen niedrigeren Bremsdruck in einem nicht-entkoppelten Bremskreis als bei dem Bremssystem entsprechend der Relation r0 nach einem Entkoppeln mindestens eines seiner Bremskreise. Daraus ergibt sich bei dem mit dem Graphen g3 wiedergegebenen Bremssystem eine Abmilderung des "harten" Pedalgefühls, welches herkömmlicher Weise nach einem Abkoppeln mindestens eines Bremskreises von einem Hauptbremszylinder der Bremssysteme entsprechend der Relation r0 auftritt. Der Benutzer des mit dem Graphen g3 wiedergegebenen Bremssystems hat deshalb auch nach einem Entkoppeln mindestens eines Bremskreises von dem Hauptbremszylinder durch das Schließen eines Trennventils nicht das Gefühl, dass sich das Bremspedal (wesentlich) härter anfühlt als bei herkömmlichen Bremssystemen ohne einen entkoppelten/entkoppelbaren Bremskreis.

Im Vergleich zu einer Ausführung eines Bremssystems mit konstanter Pedalübersetzung und ohne einen Bremskraftverstärkers (Relation r0) entspricht der mittels eines Viergelenks realisierte Pedalübersetzungsverlauf des mit dem Graphen g3 wiedergegebenen Bremssystems ab einem Bremspedalweg sp von 26 mm mehr den Relationen rb1 und rb2. Es wird darauf hingewiesen, dass die Pedalcharakteristik/das Bremspedalverhalten des mit dem Graphen g3 wiedergegebenen Bremssystems zusätzlich zu dem vorteilhaften Verlauf des Graphen g3 bis zu dem Bremspedalweg sp von 26 mm auch ab einem Bremspedalweg sp von 30 mm weiter an die Relationen rb1 und rb2 anpassbar ist. Beispielweise kann über mindestens eine elastische Komponente im Fahrzeug ab einem Bremspedalweg sp von 25 mm, bzw. 30 mm, die Pedalcharakteristik noch weiter an die Relationen rb1 und rb2 angepasst werden. Da diese elastischen Komponenten jedoch nicht unmittelbarer Gegenstand der erfindungsgemäßen Technologie sind, wird hier nicht weiter darauf eingegangen. Der mittels eines Viergelenks realisierte Pedalübersetzungsverlauf kann somit ab einem Bremspedalweg sp von 25 mm, bzw. 30 mm, an einen sonst nur mit einem Bremskraftverstärker realisierbaren Pedalkraftverlauf über dem Bremspedalweg der Relationen rb1 und rb2, welcher insbesondere im Kleinwagensegment wünschenswert ist, angepasst werden.

Die erfindungsgemäße Technologie bewirkt somit mittels eines Viergelenks eine progressive Bremsdruck-Pedalweg-Kennlinie für ein effizientes rekuperatives Bremsen eines frontgetriebenen Fahrzeugs auch ohne einen Bremskraftverstärker. Durch die Auslegung der variablen Übersetzung erhöht sich die Rekuperationseffizienz. Außerdem bewirkt die erfindungsgemäße Technologie den Vorteil, dass die Pedalkraft-Pedalwegcharakteristik eines rekuperativen Bremssystems auch ohne einen Bremskraftverstärker und mit entkoppeltem Bremskreis an den von vielen Fahrern als vorteilhaft wahrgenommen Pedalkraft-Pedalwegverlauf annäherbar ist.

Des Weiteren lässt sich die erfindungsgemäße Technologie mit weiteren Maßnahmen zur Optimierung von Rekuperationseffizienz und Pedalcharakteristik kombinieren. Beispielsweise kann ein zusätzlicher Leerweg im Hauptbremspedal oder an dem Hauptbremszylinder installiert sein. Ebenso ist die Integration eines zusätzlichen Bremsflüssigkeitsreservoirs zur Erhöhung der Bremskreiselastizität möglich. Des Weiteren kann die erfindungsgemäße Technologie mit der Technik einer Vergrößerung des Kolbendurchmessers an der Hinterachsbremszange kombiniert werden.

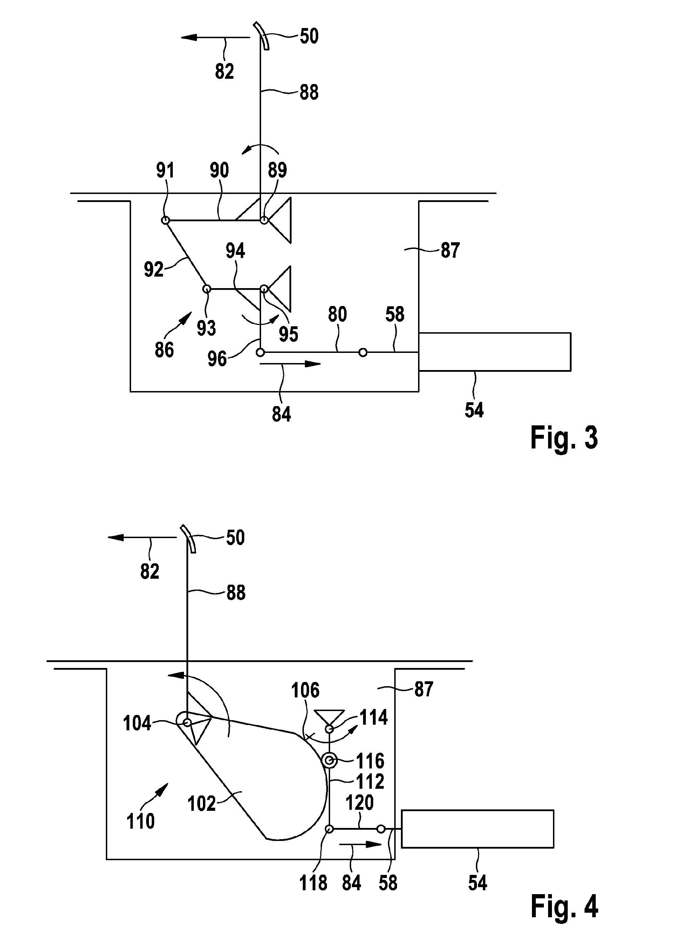

Fig. 3 zeigt eine schematische Darstellung einer zweiten Ausführungsform des Bremssystems.

Das in Fig. 3 schematisch dargestellte Bremssystem umfasst eine weitere vorteilhafte Ausbildung einer als Viergelenk 86 in einem Bauraum 87 angeordneten Verbindungseinrichtung, über welche das Bremspedal 50 mit dem Hauptbremszylinder 54 verbindbar ist. An dem Bremspedal 50 ist ein erster Arm 88 angeordnet, welcher um ein erstes Befestigungsende 89 des ersten Arms 88 drehbar ist. Das erste Befestigungsende 89 ist in dem Bauraum 87 fixiert. An dem ersten Befestigungsende 89 des ersten Arms 88 in ein erster Gelenkarm 90 angeordnet, wobei ein Zwischenwinkel zwischen dem ersten Arm 88 und dem ersten Gelenkarm 90 trotz eines Verstellens des ersten Arms 88 konstant/fest ist.

Der erste Gelenkarm 90 ist über ein erstes Gelenk 91 so mit einem zweiten Gelenkarm 92 verbunden, dass ein dazwischenliegender (nicht dargestellter) Zwischenwinkel variierbar ist. Der zweite Gelenkarm 92 führt von dem ersten Gelenk 91 zu einem zweiten Gelenk 93, über welches er mit einem dritten Gelenkarm 94 verbunden ist. Auch der Zwischenwinkel zwischen dem zweiten Gelenkarm 92 und dem dritten Gelenkarm 94 ist variierbar. Demgegenüber ist der dritte Gelenkarm 94 an einem zweiten Befestigungsende 95 in dem Bauraum 87 so fixiert, dass der dritte Gelenkarm 94 um das zweite Befestigungsende 95 drehbar ist. An dem zweiten Befestigungsende 95 ist ein zweiter Arm 96 angeordnet. Der zweite Arm 96 ist somit auch um das zweite Befestigungsende 95 drehbar, wobei ein Zwischenwinkel zwischen dem dritten Gelenkarm 94 und dem zweiten Arm 96 konstant/fest bleibt. Durch das Drehen des zweiten Arms 96 um das zweite Befestigungsende 95 ist der oben schon beschriebene Kolben 80 entlang der Richtung des Pfeils 84 linear verstellbar.

Das anhand der Fig. 3 schematisch wiedergegebene Viergelenk 86 bietet die oben schon beschriebene Kinematik und die sich daraus ergebenden Vorteile.

Fig. 4 zeigt eine schematische Darstellung einer dritten Ausführungsform des Bremssystems.

Das in Fig. 4 schematisch wiedergegebene Bremssystem weist zusätzlich zu dem Hauptbremszylinder 54 ein an dem ersten Arm 88 fest angeordnetes/ausgebildetes Bremspedal 50 auf. Das Bremspedal 50 ist an einem Befestigungsende 104 des ersten Arms 88 derart am Chassis angeordnet, dass das Bremspedal 50 mittels einer Betätigung um das Befestigungsende 104 des ersten Arms 88 drehbar ist. An dem Befestigungsende 104 des ersten Arms 88 ist eine Kurvenscheibe 102 so angeordnet/ausgebildet, dass ein Zwischenwinkel zwischen dem ersten Arm 88 und der Kurvenscheibe 102 trotz einer Betätigung des Bremspedals 50 konstant/fest bleibt.

Die mit dem Bremspedal 50 verbundene Kurvenscheibe 102 weist eine Wölbungsfläche 106 als Teil einer Verbindungseinrichtung 110 für eine nichtlineare Pedalübersetzung auf, welche sich jedoch nicht über 360° erstrecken muss. Die Verbindungseinrichtung 110 weist zusätzlich einen Kontakthebel 112 auf, welcher an einem Befestigungsende 114 drehbar am Chassis gelagert ist. An dem Kontakthebel 112 ist eine Rolle 116 angeordnet, welche die Wölbungsfläche 106 der Kurvenscheibe 102 kontaktiert. Bei einer Betätigung des Bremspedals 110 rollt die Rolle 116 an der Wölbungsfläche 106 der Kurvenscheibe 102 entlang.

Ein Entlangrollen der Rolle 116 an der Wölbungsfläche 106 der Kurvenscheibe 102 bewirkt eine Drehung des Kontakthebels 112 um das Befestigungsende 114. Die Rolle 116 ist zwischen einem Kolben-Kontaktpunkt 118 und dem Befestigungsende 114 des Kontakthebels 112 angeordnet. Zwischen dem Kolben-Kontaktpunkt 118 und den Kolben 58 verläuft ein Kolben-Verbindungselement 120. Die Verbindung des Kolben-Verbindungselements 120 mit dem Kontakthebel 112 (am Kolben-Kontaktpunkt 118) ist als Gelenk ausgebildet, so dass ein Winkel zwischen dem Kolben-Verbindungselement 120 und einer Tangente/Längsrichtung des Kontakthebels 112 am Kolben-Kontaktpunkt 118 bei einer Betätigung des Bremspedals und während eines Entlangrollens der Rolle 116 an der Wölbungsfläche 106 veränderbar ist. Auf diese Weise sind auch mittels der Verbindungseinrichtung 110 die oben schon genauer beschriebene nichtlineare Pedalübersetzung und ihre Vorteile gewährleistbar.

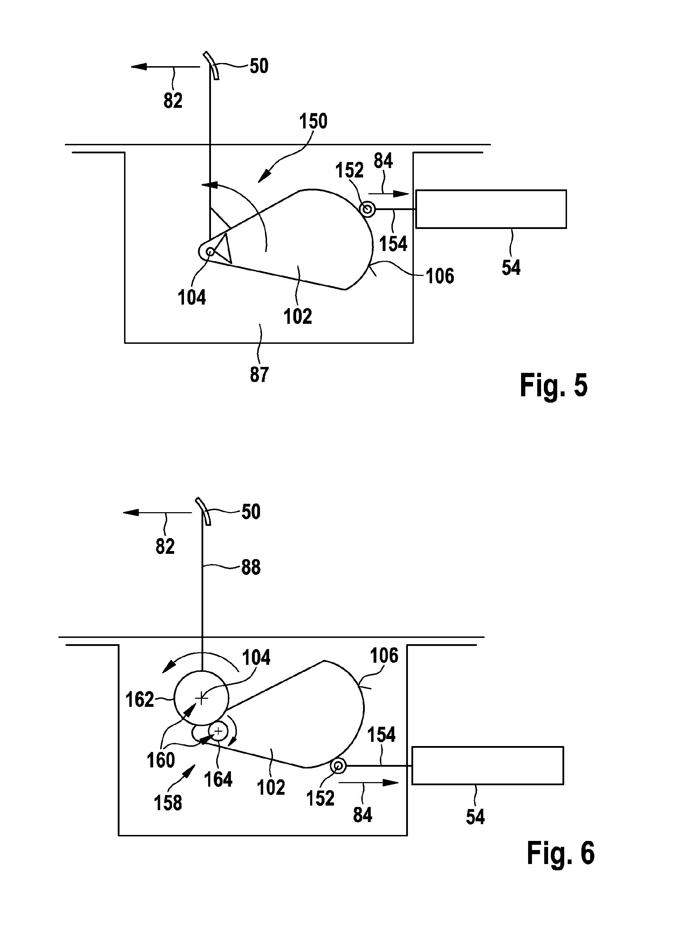

Fig. 5 zeigt eine schematische Darstellung einer vierten Ausführungsform des Bremssystems.

Die in Fig. 5 schematisch wiedergegebene Ausführungsform weist zusätzlich zu dem Hauptbremszylinder 54 das oben schon beschriebene Bremspedal 50 mit der Kurvenscheibe 102 auf. Das Bremspedal 50 ist bei der hier beschriebenen Ausführungsform mit dem (mindestens einen nicht skizzierten) Kolben des Hauptbremszylinders 54 über eine Verbindungseinrichtung 150 verbunden, welche zusätzlich eine die Wölbungsfläche 106 der Kurvenscheibe 102 kontaktierende Rolle 152 und einen axial geführten Stößel 154 umfasst. Die axiale Führung des Stößels 154 ist beispielsweise mittels einer (nicht dargestellten) Führung realisierbar, aus deren Aussparung der Stößel 154 beidseitig herausragt. Mittels des Stößels 154 ist die Rolle 152 mit den Kolben 58 verbunden.

Eine Betätigung des Bremspedals 50 bewirkt eine Rollbewegung der Rolle 152 entlang der Wölbungsfläche 106 der Kurvenscheibe 102. Allerdings ist ein Mittelpunkt der Rolle 152 lediglich entlang einer Längsrichtung des axial geführten Stößels 154 verstellbar. Senkrecht zu der Längsrichtung des Stößels 154 ist keine Bewegung des Mittelpunkts der Rolle 152 möglich.

Somit ist auch bei der Verbindungseinrichtung 150 eine variable Übersetzung derart gewährleistet, dass die gewünschte nicht-lineare Pedalübersetzung ausgeführt wird. Dies gewährleistet auch bei dieser Ausführungsform die oben schon beschriebenen Vorteile.

Fig. 6 zeigt eine schematische Darstellung einer fünften Ausführungsform des Bremssystems.

Das in Fig. 6 wiedergegebene Bremssystem umfasst eine Weiterbildung der oben beschriebenen Ausführungsform als Verbindungseinrichtung 158. Dabei ist die Kurvenscheibe 102 anstelle einer direkten winkelfesten Anordnung zu dem Bremspedal, bzw. dem ersten Arm 88, über eine Zahnradstufe 160 mit dem Bremspedal 50 verbunden. Die Zahnradstufe 160 umfasst ein an dem Befestigungsende 104, um welches der erste Arm 88 drehbar ist, angeordnetes erstes Zahnrad 162. Das erste Zahnrad 162 ist so mit dem ersten Arm 88 verbunden, dass seine Stellung bezüglich des ersten Arms 88 trotz einer Drehbewegung des ersten Arms 88 konstant bleibt. Das erste Zahnrad 162 kontaktiert ein an der Kurvenscheibe 102 fest angeordnetes zweites Zahnrad 164. Bei der Drehbewegung des ersten Zahnrads 162 zusammen mit dem ersten Arm 88 werden das zweite Zahnrad 164 und die damit fest verbundene Kurvenscheibe 102 in eine weitere Drehbewegung versetzt. Auf diese Weise ist die an der Wölbungsfläche 106 der Kurvenscheibe 102 anliegende Rolle 152 entlang einer Längsrichtung des axial geführten Stößels 154 verstellbar.

Mittels der Komponenten 88, 102, 152, 154, 162 und 164 ist eine weitere vorteilhafte Verbindungseinrichtung 166 für eine nicht-lineare Pedalübersetzung zum Bewirken der oben schon beschriebenen Vorteile realisierbar.

In den oben beschriebenen Figuren sollen die wiedergegebenen Längenverhältnisse und Winkelverhältnisse lediglich die einzelnen Komponenten der daraus zusammengesetzten Verbindungseinrichtungen deutlich machen. Sie sind deshalb nicht als beschränkend anzusehen.

Alle oben beschriebenen Verbindungseinrichtungen sind vorteilhaft in einem regenerativen Bremssystem einsetzbar. Damit realisierbar ist insbesondere ein rekuperatives Bremssystem ohne einen Bremskraftverstärker und mit einem entkoppelbaren Bremskreis, wie beispielsweise einem entkoppelbaren Vorderachs-Bremskreis, welcher sich besonders für einen Einsatz in kleinen, frontgetriebenen Elektrofahrzeugen eignet. Die Einsetzbarkeit der oben beschriebenen Verbindungseinrichtungen ist jedoch nicht auf ein frontgetriebenes Kraftfahrzeug beschränkt.

Mittels der oben beschriebenen Verbindungseinrichtungen kann ein frühzeitiger Bremsdruckaufbau in einem Radbremszylinder verhindert werden. Der außerdem bewirkbare geringe Anstieg der Pedalkraft bei einem kleinen Bremspedalweg gewährleistet ein verlängertes generatorisches Bremsen. Die Rekuperationseffizienz ist auf diese Weise steigerbar. Der gegenüber dem Stand der Technik steilere Gradient der Pedalkraft bei einem großen Bremspedalweg gewährleistet trotz des geringen Anstiegs der Pedalkraft bei einem kleinen Bremspedalweg einen raschen Bremsmomentaufbau für ein verlässliches Abbremsen des Fahrzeugs.

Mittels der oben beschriebenen Verbindungseinrichtungen ist auch ein angenehmen Bremsgefühl für den Fahrer bewirkbar. Insbesondere ist mittels der Verbindungseinrichtungen verhinderbar, dass das Bremspedal nach einem Entkoppeln mindestens eines abtrennbaren Bremskreises sich "kurz" und/oder "hart" anfühlt. Herkömmlicherweise erscheint ein Bremspedal in einer derartigen Situation häufig als kurz oder hart, da das Bremspedal in diesem Fall einen vergleichsweise hohen Druckaufbau in dem nicht-entkoppelbaren Bremskreis bewirkt. Dieser Nachteil ist mittels der Verbindungseinrichtungen behebbar.

Trotz der oben aufgeführten Vorteile der Verbindungseinrichtungen in einem rekuperativen Bremssystem ist die Einsetzbarkeit der oben beschriebenen Ausführungsformen jedoch nicht auf regenerative Bremssysteme beschränkt.

## Patentansprüche

1. Bremssystem für ein Fahrzeug mit:
einem Hauptbremszylinder (54) mit mindestens einem um einen Hauptbremszylinderkolbenweg (sk) zumindest teilweise in eine Innenkammer (56) hinein verstellbaren Kolben (58); und
einer Verbindungseinrichtung (60, 86, 110, 150, 158), über welche der Kolben (58) des Hauptbremszylinders (54) mit einem an der Verbindungseinrichtung (60, 86, 110, 150, 158) anordbaren Bremspedal (50) derart verbindbar ist, dass bei einem Verstellen des Bremspedals (50) um einen Bremspedalweg (sp) der Kolben (58) zumindest teilweise in die Innenkammer (56) hinein verstellbar ist;
**dadurch gekennzeichnet, dass**
die Verbindungseinrichtung (60, 86, 110, 150, 158) zumindest für einen Teilwertebereich (W) des Bremspedalwegs (sp) für eine nichtlineare Pedalübersetzung derart ausgelegt ist, dass mit zunehmendem Bremspedalweg (sp) innerhalb des Teilwertebereichs (W) die Steigung der Zunahme des Hauptbremszylinderkolbenwegs (sk) zunimmt.

2. Bremssystem nach Anspruch 1, wobei die Verbindungseinrichtung (60, 86, 110, 150, 158) für die nichtlineare Pedalübersetzung derart ausgelegt ist, dass der Hauptbremszylinderkolbenweg (sk) zumindest für den Teilwertebereich (W) des Bremspedalwegs (sp) eine linksgekrümmte Funktion (sk(sp)*) des Bremspedalwegs (sp) ist.

3. Bremssystem nach Anspruch 1 oder 2, wobei das Bremssystem einen Generator umfasst.

4. Bremssystem nach einem der vorhergehenden Ansprüche, wobei das Bremssystem zumindest einen ersten Bremskreis (62a) mit mindestens einem ersten Radbremszylinder (64a) umfasst, welcher über ein Trennventil (66) derart mit dem Hauptbremszylinder (54) hydraulisch verbunden ist, dass bei einem Vorliegen des Trennventils (66) in einen zumindest teilgeöffneten Zustand ein Bremsdruck in dem mindestens einen ersten Radbremszylinder (64a) mittels einer Steigerung des Innendrucks steigerbar ist, und wobei bei einem Vorliegen des Trennventils (66) in einem geschlossenen Zustand eine Steigerung des Bremsdrucks in dem mindestens einen ersten Radbremszylinder (64a) trotz der Steigerung des Innendrucks unterbunden ist.

5. Bremssystem nach einem der vorhergehenden Ansprüche, wobei die Verbindungseinrichtung (60, 86) mit dem Bremspedal (50) als Viergelenk ausgebildet ist.

6. Bremssystem nach Anspruch 5, wobei die als Viergelenk ausgebildete Verbindungseinrichtung (60) einen Zwischenhebel (70), welcher um ein Befestigungsende (72) des Zwischenhebels (70) drehbar angeordneten ist, ein Pedal-Verbindungselement (74), welches über ein erstes Gelenk (75) mit dem Bremspedal (50) und über ein zweites Gelenk (76) mit dem Zwischenhebel (70) verbunden ist, und ein mit dem Kolben (58) verbundenes Kolben-Verbindungselement (80), welches über ein drittes Gelenk (78) mit dem Zwischenhebel (70) verbunden ist, umfasst.

7. Bremssystem nach einem der Ansprüche 1 bis 4, wobei die Verbindungseinrichtung (110, 150, 158) eine mit dem Bremspedal (50) verbundene Kurvenscheibe (102) umfasst, deren Wölbungsfläche (106) eine Rolle (116, 152) der Verbindungseinrichtung (110, 150, 158) kontaktiert.

8. Bremssystem nach Anspruch 7, wobei die Rolle (116) an einem Kontakthebel (112) der Verbindungseinrichtung (110) angeordnet ist, welcher um ein Befestigungsende (114) des Kontakthebels (112) drehbar angeordneten ist, und wobei ein mit dem Kolben (58) verbundenes Kolben-Verbindungselement (120) der Verbindungseinrichtung (110) über ein Gelenk (118) mit dem Kontakthebel (112) verbunden ist.

9. Bremssystem nach Anspruch 7, wobei die Rolle (152) an einem axial geführten Stößel (154) der Verbindungseinrichtung (150, 158) angeordnet ist.

10. Bremssystem nach einem der Ansprüche 7 bis 9, wobei die Kurvenscheibe (102) über eine Zahnradstufe (160) mit dem Bremspedal (50) verbunden ist.
